**Europäisches Patentamt**

**European Patent Office**

**Office européen des brevets**

(11) Publication number: **0 390 423 B1**

# EUROPEAN PATENT SPECIFICATION

(45) Date of publication of patent specification: **02.11.94**　(51) Int. Cl.5: **B60K 41/28**

(21) Application number: **90303086.4**

(22) Date of filing: **22.03.90**

(54) **Method for controlling an internal combustion engine for vehicle with automatic transmission system.**

(30) Priority: **27.03.89 JP 71800/89**

(43) Date of publication of application:
**03.10.90 Bulletin 90/40**

(45) Publication of the grant of the patent:
**02.11.94 Bulletin 94/44**

(84) Designated Contracting States:
**DE GB SE**

(56) References cited:
**EP-A- 0 129 417　　EP-A- 0 244 131
US-A- 4 393 964　　US-A- 4 750 598
US-A- 4 765 450　　US-A- 4 785 917**

(73) Proprietor: **DIESEL KIKI CO. LTD.**
**6-7 Shibuya 3-chome**
**Shibuya-ku Tokyo 150 (JP)**

(72) Inventor: **Kono, Hiromi, c/o Diesel Kiki Co.,Ltd.**
**Higashimatsuyama Plant,**
**13-26, Yakyu-cho 3-chome**
**Higashimatsuyama-shi, Saitama 355 (JP)**
Inventor: **Ohtsuka, Masuhiro, c/o Diesel Kiki**
**Co.,Ltd.**
**Higashimatsuyama Plant,**
**13-26, Yakyu-cho 3-chome**
**Higashimatsuyama-shi, Saitama 355 (JP)**

(74) Representative: **Cheyne, John Robert Alexan-**
**der Mackenzie et al**
**HASELTINE LAKE & CO.**
**28 Southampton Buildings**
**Chancery Lane**
**London WC2A 1AT (GB)**

## Description

BACKGROUND OF THE INVENTION

Field of the Invention

The present invention relates to a method for controlling an internal combustion engine for powering a vehicle with an automatic transmission system including a gear transmission and a clutch.

Description of the Prior Art

In the conventional motor vehicle with an automatic transmission system including a friction type clutch and a gear type transmission, which are electronically controlled in accordance with the operation parameters of the associated vehicle to perform gear-shifting operation automatically, for preventing excessively high engine speed during clutch disengagement, it is necessary to control the throttle valve of the engine so as to lower the engine speed during clutch disengagement and so as to return the engine speed to a prescribed level at the time of clutch engagement. However, in such an engine speed control system if the engine speed is not properly controlled to an appropriate speed at the time the transmission has just shifted, the driver and or passengers will experience an uncomfortable feeling of acceleration or deceleration after the gear-shifting operation.

To overcome the drawbacks mentioned above, Japanese Patent Application Public Disclosure No. Sho 62-67243 discloses an engine control method in which the fuel quantity supplied to the engine is controlled so as to realize a target engine speed determined in response to the gear ratio after the gear-shifting operation, the vehicle speed before the gear-shifting operation and the amount of operation of the accelerator pedal, whereby the feeling of deceleration when shifting up, the feeling of acceleration when shifting down, the feeling of deceleration at a kick-down operation and the like can be eliminated. That is, the proposed control method mentioned above is for softening the shock occurring at the time of a gear-shifting operation by correcting the engine speed. However, since the feeling of acceleration/deceleration expected by the driver depends upon how a member for regulating the fuel quantity has been manipulated, it is difficult to eliminate the incompatibility between the expected vehicle acceleration/deceleration and the actual operation of the member. In other words, in the case of, for example, a kick-down operation, the feeling of deceleration experienced at that time cannot be eliminated even if the target engine speed is corrected to a slightly higher speed, and it will be required to quickly implement a full-throttle condition in order to make the driver experience a sufficient feeling of acceleration.

Furthermore, according to the proposed control method, since the target engine speed used after the gear-shifting operation is set on the assumption that a large change in the vehicle speed will not occur during the gear-shifting operation, even if the target engine speed for zero-throttle state is set in the case where braking power is applied to the vehicle by the depression of the brake pedal during a gear-shifting down operation, the target engine speed will still be too high to be matched with the deceleration of the vehicle, and this will make the driver feel uncomfortable.

US 4785917 discloses an automatic transmission apparatus in which, after clutch disengagement and when the speed ratio of the transmission has been changed, a fuel injection pump is controlled so that the rotational speed of the output shaft substantially coincides with that of the input shaft of the transmission. Subsequently, clutch engagement takes place and after complete clutch engagement or after the clutch has been brought substantially into engagement, the amount of fuel injected is then controlled in accordance with the degree of depression of an accelerator pedal.

SUMMARY OF THE INVENTION

According to the present invention there is provided a method for controlling the speed of a vehicle engine with an automatic transmission system, which includes a clutch and a gear transmission electronically controlled so as to shift automatically the gear transmission to a target gear position determined in response to an operation parameter or parameters of the vehicle, said method comprising the steps of:

determining a target speed of the engine during a condition of disengagement of the clutch;

detecting the operation condition of the clutch;

regulating a fuel regulating member for controlling the fuel quantity supplied to the internal combustion engine so as to obtain the target speed while the clutch is in its disengaged state; and

detecting the amount of operation of an accelerating member, characterised in that the method further comprises the step of

controlling the fuel regulating member, during at least a part of the period during which the clutch is being brought substantially into engagement after the gear transmission was shifted into the target gear position, so as to change gradually the condition of the fuel regulating member in accordance with the amount of operation of the accelerating member of the vehicle at that time.

The position of the fuel regulating member is controlled so that the speed of the engine is maintained at the target speed after the start of the disengagement operation of the clutch for gear-shifting. After the gear transmission has been shifted, the operation for gradually moving the fuel regulating member forward or backward is started, and preferably the fuel regulating member will reach the position corresponding to the amount of operation of the accelerating member by the completion of the clutch engagement. In this way, the speed of the engine corresponds to the amount of operation of the accelerating member at the time when the clutch engagement operation has just been completed. As a result, the driver will experience an acceleration/deceleration feeling corresponding to the amount of operation of the accelerating member at that time, when the clutch operation, namely the automatic gear-shifting operation, is completed.

The method may further comprise the steps of:

detecting whether or not a braking device is operated; and

correcting the target engine speed to a lower speed in accordance with the operation condition of the braking device.

Thus, the fuel quantity supplied to the engine at the completion of the clutch engagement is controlled so as to attain the corrected target speed, whereby the driver experiences a feeling of vehicle deceleration matched to his braking operation.

The invention will be better understood and other objects and advantages thereof will be more apparent from the following detailed description of preferred embodiments with reference to the accompanying drawings.

## BRIEF DESCRIPTION OF THE DRAWINGS

Fig. 1 is a view schematically showing an embodiment of a vehicle control system with an automatic transmission system, in which the engine speed during automatic gear-shifting operation is controlled in accordance with the present invention;

Fig. 2 is a flowchart showing a first control program executed in the engine control unit shown in Fig. 1;

Fig. 3 is a flowchart showing a second control program executed in the engine control unit shown in Fig. 1;

Fig. 4 is a detailed flowchart showing a transient control step of the second control program shown in Fig. 3;

Figs. 5A to 5C are graphs showing the vehicle operation according to the present invention;

Fig. 6 is a view schematically showing another embodiment of a vehicle control system with an automatic transmission system, in which the engine speed during automatic gear-shifting operation is controlled in accordance with the present invention; and

Fig. 7 is a flowchart showing a control program executed in the engine control unit shown in Fig. 6.

## DESCRIPTION OF THE PREFERRED EMBODIMENTS

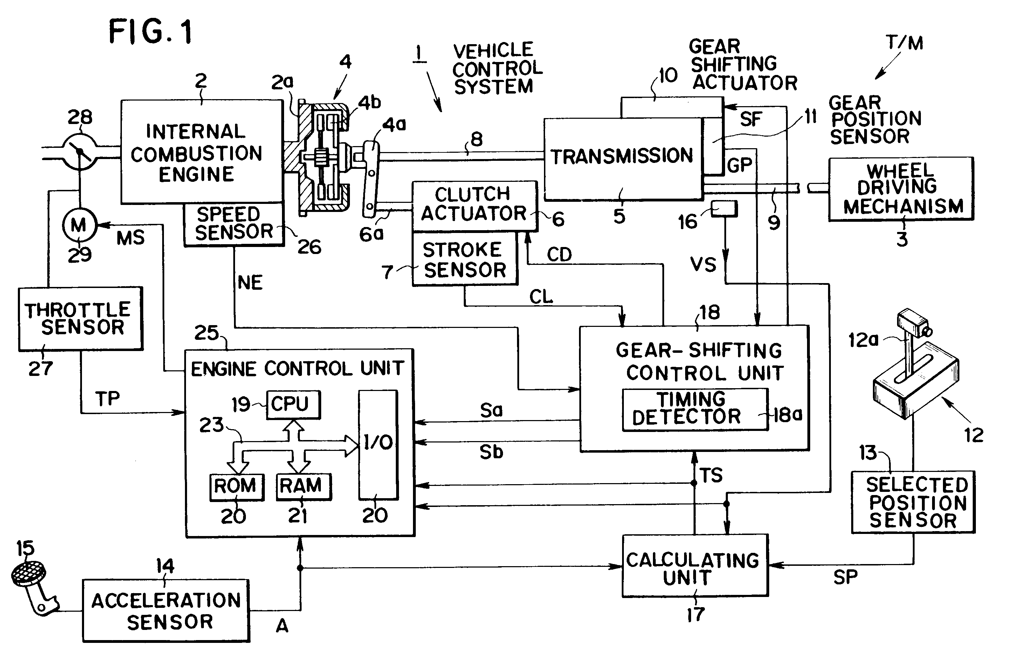

Fig. 1 schematically shows an embodiment of a control system for a vehicle with an electronically controlled type automatic transmission system coupled with an internal combustion engine whose rotational speed during automatic gear-shifting operation is controlled in accordance with the present invention. Reference numeral 1 generally designates a vehicle control system for a vehicle (not shown) which is powered by an internal combustion engine 2 and an automatic transmission system T/M comprising a friction clutch 4 mounted on an engine flywheel 2a and a gear type synchromesh transmission 5. In this embodiment, the friction clutch 4 is a well-known dry-type single-disc clutch having a clutch release lever 4a and a pressure plate 4b. In order to control the engaging/disengaging (ON/OFF) operation of the clutch 4, there is provided a clutch actuator 6 having a piston rod 6a connected to the clutch release lever 4a for actuating the clutch release lever 4a. The clutch actuator 6 is coupled with a stroke sensor 7 for detecting the position of the pressure plate 4b of the clutch 4 and a clutch signal CL indicating the position of the pressure plate 4b is produced by the stroke sensor 7. The clutch 4 is connected by a connecting rod 8 with the transmission 5, and the rotational output of the transmission 5 is transmitted through a propeller shaft 9 to a wheel driving mechanism 3 of the vehicle.

The transmission 5 is actuated by a gear shifting actuator 10 associated therewith, and the gear position set in the transmission 5 is detected by a gear position sensor 11 associated with the transmission 5 to produce a gear position signal GP showing the actual gear position set in the gear transmission 5.

The vehicle has a selector 12 with a selecting lever 12a that is manipulated by the driver to select one position from among a plurality of positions which includes an "N" position (neutral), a "1" position (1st gear), a "2" position (2nd gear), a "3" position (3rd gear), a "D" position (automatic gear changing position), and an "R" position (reverse gear). That is, the driver manipulates the selecting lever 12a in order to select a desired control mode for the transmission 5. The selecting lever 12a is coupled with a selected position sensor 13 for producing a selected position signal SP showing the position of the selecting lever 12a.

An acceleration sensor 14 is associated with an accelerator pedal 15 and produces an acceleration signal a showing the amount of operation of the accelerator pedal 15. Reference numeral 16 indicates a known vehicle speed sensor mounted on the propeller shaft 9 for producing a vehicle speed signal VS showing the running speed of the vehicle powered by the engine 2.

The vehicle speed signal VS, the selected position signal SP and the acceleration signal A, which represent operating parameters of the vehicle, are applied to a calculating unit 17 comprising gear-shift map data. The gear-shift map data is for determining the gear position of the transmission 5 to be used at each instant in response to the amount of operation of the accelerator pedal 15 and the vehicle speed in a well-known manner.

In the calculating unit 17 a plurality of sets of gear-shift map data are provided, each of which is assigned so as to correspond to the respective position to be selected by the selecting lever 12a. The calculating unit 17 is responsive to the selected position signal SP to select a set of gear-shift map data corresponding to the position selected by the selector 12 at that time, and calculation is carried out to determine the target gear position on the basis of the selected gear-shift map data in accordance with the acceleration signal a and the vehicle speed signal VS. The calculated result of the calculating unit 17 is output as a target signal TS representing the target gear position to which the transmission 5 is to be shifted. The target signal TS is applied to a gear-shifting control unit 18. In the calculating unit 17 the necessary map calculation may be performed at appropriate time intervals to obtain the target signal TS as discrete information.

The gear-shifting control unit 18 comprises a well-known type microcomputer system which includes a central processing unit (CPU), read-only memory (ROM), random access memory (RAM) and I/O interface, which are interconnected by a bus to form a microcomputer. The arrangement of the microcomputer is not illustrated in Fig. 1 as it is conventional. The gear-shifting control unit 18 receives the clutch signal CL, the gear position signal GP and an engine speed signal NE output by a known speed sensor 26 associated with the internal combustion engine 2 and indicating the rotational speed of the internal combustion engine 2, and converts these signals into digital form. The converted data are processed in accordance with a conventional control program stored in advance in the gear-shifting control unit 18 to produce a shift control signal SF and a clutch control signal CD which serve to shift the gear of the transmission 5 into the target gear position indicted by the target signal TS.

The shift control signal SF is applied to the gear shifting actuator 10 for controlling the gear shifting actuator 10 so as to shift the gear of the transmission 5 into the determined target gear position, while the clutch control signal CD for driving the clutch 4 so as to engage or disengage the clutch 4, is applied to the clutch actuator 6.

The gear-shifting control unit 18 further outputs a first signal Sa and a second signal Sb. The level of the first signal Sa is high only during a series of operations for carrying out automatic gear-shifting operation, that is, only, between the beginning of the operation for shifting the transmission 5 to the target position determined at that time and the end of the operation of the engagement of the clutch 4. The level of the second signal Sb is high only between beginning of the operation for engaging the clutch 4 just after the transmission 5 has been shifted to the target gear position and the end of the operation of the engagement of the clutch 4. The first and second signals Sa and Sb are produced by a timing detector 18a in the gear-shifting control unit 18 and applied to an engine control unit 25 which receives the acceleration signal A, the target signal TS, the vehicle speed signal VS and a throttle position signal TP produced by a throttle sensor 27 coupled with a throttle valve 28 and indicating the throttle position of the throttle valve 28 for throttling the flow of fuel into the internal combustion engine 2.

The engine control unit 25 includes a central processing unit (CPU) 19, read-only memory (ROM) 20, random access memory (RAM) 21 and I/O interface 22, which are interconnected by a bus 23 to form conventional microcomputer system, and a control program for controlling the throttle position of the throttle valve 28 so as to perform the engine speed control is stored in advance in the ROM 20. The engine control unit 25 functions to regulate the engine speed based on the manipulation of the accelerator pedal 15 and to regulate the engine speed so as to match the operation condition of the automatic transmission system T/M, and the necessary control operations are carried out in accordance with the control program stored in the ROM 20 in response to the input signals to produce a motor control signal MS. A motor 29 coupled with the throttle valve 28 is responsive to the motor control signal MS to obtain a throttle position determined by the engine control unit 25 as will be described below.

The control program executed in the engine control unit 25 is composed of a first control program 40 which is executed at predetermined constant time intervals and is for determining a throttle control mode of the throttle valve 28, and a second control program 50 for controlling the throttle position of the throttle valve 28 in the control mode determined in the first control program 40, which is also executed at predetermined constant time intervals.

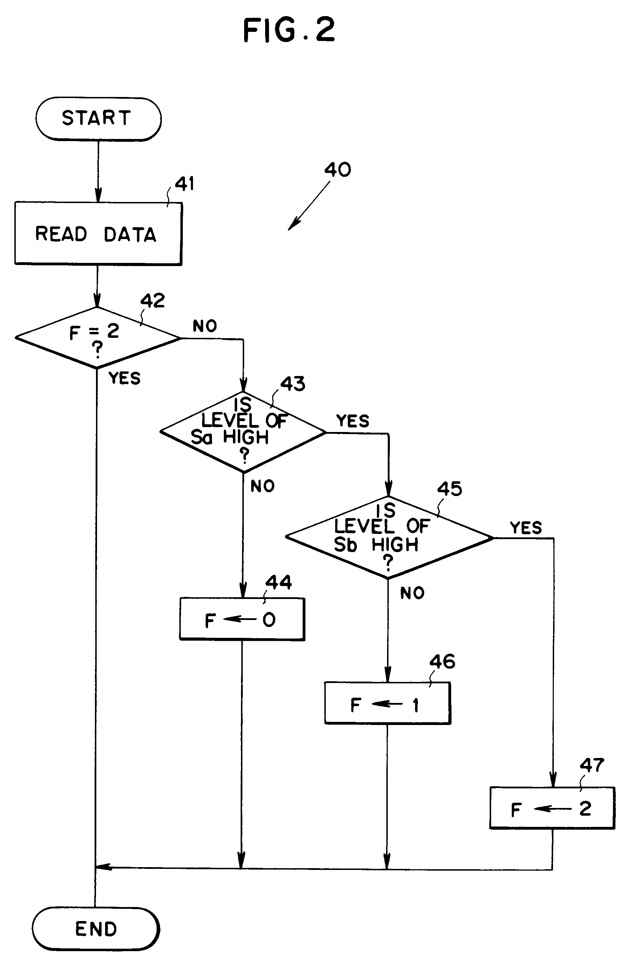

Fig. 2 is a flowchart showing the first control program 40. When the execution of the first control program 40 starts, the operation moves to step 41 wherein data corresponding to the first and second signals Sa and Sb are read in, and the operation moves to step 42 wherein discrimination is made as to whether or not the content of a flag F for indicating the control mode of the throttling operation of the throttle valve 28 is 2, meaning a transient control mode which will be described in more detail later.

Since the flag F is set to 0 when the initializing operation is carried out for the engine control unit 25, the determination in step 42 becomes NO at the time of the first program cycle. The determination in step 42 becomes YES when F is equal to 2 and the execution of the first control program 40 is completed.

The operation moves to step 43 when the determination in step 42 is NO, and discrimination is made as to whether or not the automatic gear-shifting operation is being carried out in the automatic transmission system T/M on the basis of the first signal Sa. The determination in step 43 becomes NO when no automatic gear-shifting operation is being carried out, that is, when the level of the first signal Sa is low, and the operation moves to step 44 wherein the flag F is set to 0, which means a normal control mode in which the throttle position is proportionally controlled in accordance with the amount of operation of the accelerator pedal 15. The execution of the first control program 40 is completed by the execution of step 44.

The operation moves to step 45 if the determination in step 43 becomes YES, and discrimination is made in step 45 based on the second signal Sb as to whether or not the operation for engaging the clutch 4 has begun, that is, whether the level of the second signal Sb is high. The determination in step 45 becomes NO when the operation for clutch engagement has not started yet, and the operation moves to step 46 wherein the flag F is set to 1, which means a constant control mode in which the throttle position is controlled so as to obtain a prescribed engine speed irrespective of the amount of operation of the accelerator pedal 15. Then, the execution of the first control program 40 is completed. Thus, in the case where the automatic gear-shifting operation has begun, but the operation for clutch engagement has not started, the constant control mode is selected.

The determination in step 45 changes from NO to YES if the operation for clutch engagement has started, and the operation moves to step 47 wherein the flag F is set to 2, which means a transient control mode in which the throttle position is gradually changed to the position corresponding to the amount of operation of the acceleration pedal 15 so as to reach the corresponding position at the time the clutch 4 has just been completely engaged, or before complete engagement of the clutch 4.

That is, the normal control mode is selected in the case where automatic gear-shifting operation is not being carried out, and the constant control mode is selected between the beginning of the automatic gear-shifting operation and the start of the operation for engaging the clutch 4 after the gear position of the transmission 5 is changed to the desired target gear position. Furthermore, the transient control mode is selected during the clutch engagement operation just after the transmission 5 is shifted to the target gear position.

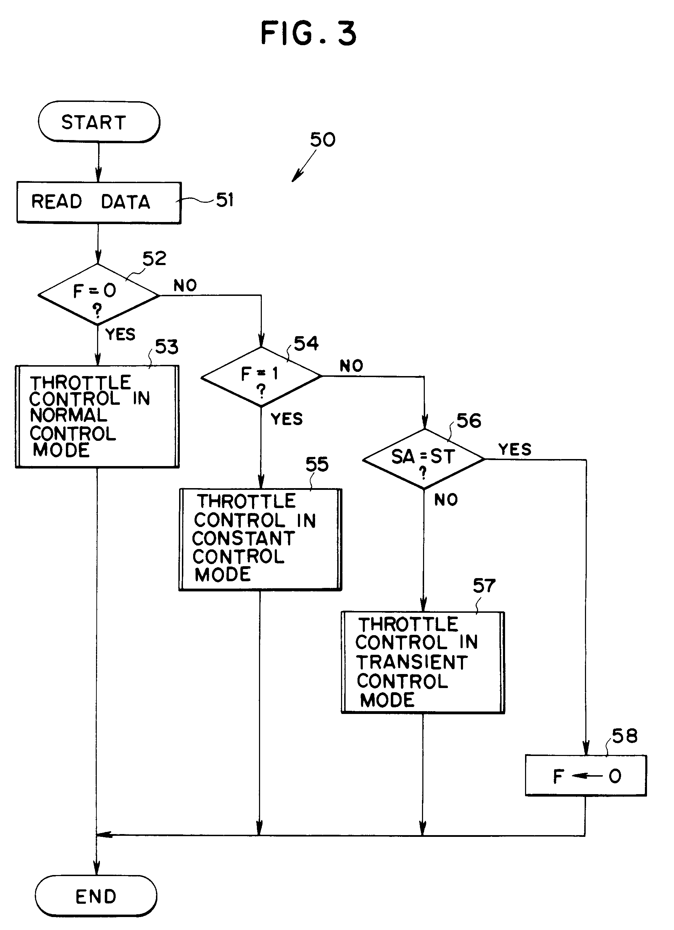

Description will be now given to the second control program 50 with reference to the flowchart of Fig. 3 illustrating the second control program 50. When the execution of the second control program 50 starts, the operation moves to step 51 wherein the data corresponding to the acceleration signal A, the target signal TS, the vehicle sped signal VS and the throttle position signal TP are read in, and the operation moves to step 52 wherein discrimination is made as to whether or not the flag F is 0. The operation moves to step 53 when F is 0, and the throttle position of the throttle valve 28 is proportionally controlled in the normal control mode in which the throttle position is determined in accordance with the acceleration signal $a$ and the motor control signal MS is produced to proportionally control the actual throttle position indicated by the throttle position signal TP to be coincident with the target throttle position. That is, the actual throttle position is proportionally controlled in accordance with the acceleration signal A. After this, the execution of the second control program 50 is completed.

When the flag F is not equal to 0 in step 52, the operation moves to step 54 wherein discrimination is made as to whether or not the flag F is equal to 1. The determination in step 54 becomes YES when the flag F is equal to 1, and the operation moves to step 55 wherein the throttle position is controlled in the constant control mode, in which the target engine speed RT is determined in accordance with the following formula:

$$RT = VS/GR \qquad (1)$$

where VS is the vehicle speed and GR is the gear ratio of the new gear position which will be obtained by the automatic gear-shifting operation. The target engine speed RT may be corrected appropriately when braking power is applied to the vehicle. Since the transmission 5 is disconnected from the internal combustion engine 2 when the constant control mode is implemented, the target engine speed RT can be easily converted into the corresponding throttle position to obtain the converted target throttle position. The actual throttle position shown by the throttle position signal TP is compared with the converted target throttle position, and the actual throttle position of the throttle valve 28 is controlled so as to be equal to the converted target throttle position, whereby the target engine speed RT can be obtained. The execution of the second control program 50 is completed after the execution of step 55.

When the determination is step 54 becomes NO, the operation moves to step 56 wherein the target throttle position ST is determined in accordance with the amount of operation of the accelerator pedal 15 in the same manner as the determination in the normal control mode and discrimination is made as to whether or not the actual throttle position SA is coincident with the determined target throttle position ST. When the actual throttle position SA is not coincident with the target throttle position ST, the determination in step 56 becomes NO and the operation moves to step 57 in which the throttle position is controlled in the transient control mode. In contrast, in the case where the determination in step 56 becomes YES, the operation moves to step 58 wherein the flag F is set to 0. The execution of the second control program 50 is completed when the execution of step 57 or 58 has been finished.

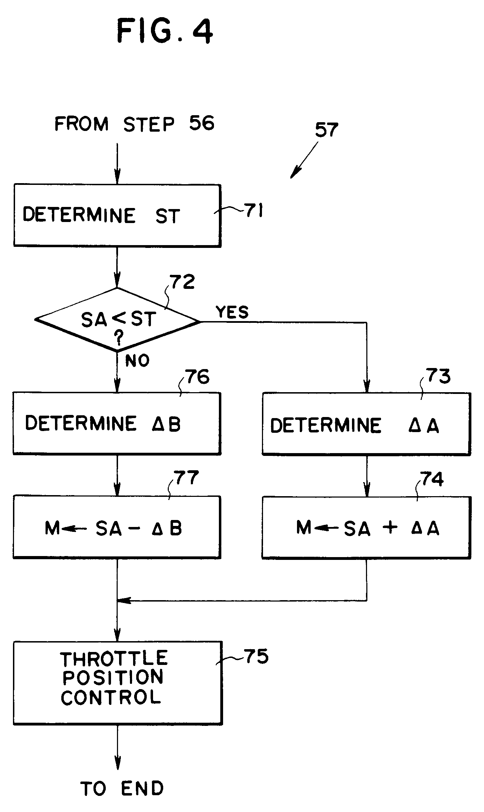

Fig. 4 is a detailed flowchart of step 57 of Fig. 3. In step 71 a target throttle position is determined in accordance with the amount of operation of the accelerator pedal 15 in the same manner as the determination in the normal control mode (step 53), and the resulting target throttle position ST is stored as the target throttle position used in the transient control mode. After this, in step 72 the target throttle position ST is compared with the actual throttle position SA indicated by the throttle position signal TP. The determination in step 72 becomes YES when ST is greater than SA and the operation moves to step 73 wherein the step amount $\Delta A$ is determined. $\Delta A$ is an incremental amount per program cycle for causing the actual throttle position SA to gradually approach the target throttle position ST, and may be determined in relation to the gear position, the amount of operation of the accelerator pedal 15 and the like at that time.

After the determination of $\Delta A$, the set value M is determined by adding $\Delta A$ to the actual throttle position SA at that time in step 74, and the operation moves to step 75 wherein the throttle position is controlled so as to be equal to the set value M. Thus, the throttle position control is carried out in such a way that the actual throttle position is increased by $\Delta A$ for each program cycle. This control operation is continued until SA has become ST, as will be understood from the operation executed in step 56 of the second control program 50 shown in Fig. 3. The maximum value of the set value M at this time will be referred to as Mmax.

On the other hand, when SA is greater than ST in step 72, the determination in step 72 becomes NO and the operation moves to step 76 wherein the step amount $\Delta B$ is determined. $\Delta B$ is an decrement amount per program cycle for causing the actual throttle position SA to gradually approach the target throttle position ST, and may be determined in relation to the gear position, the amount of operation of the accelerator pedal 15 and the like at that time.

After the determination of $\Delta B$, the set value M is determined by subtracting $\Delta B$ from the actual throttle position SA in step 77, and the operation moves to step 75 wherein the throttle position is controlled so as to be equal to the set value M. Thus, the throttle position control is carried out in such a way that the actual throttle position SA is decreased by $\Delta B$ for each program cycle. This control operation is continued until SA has become ST, as will be understood from the operation executed in step 56 of the second control program 50 shown in Fig. 3. The set minimum value of the value M at this time will be referred to as Mmin.

As a result, in the case where SA is not equal to ST, the actual throttle position is increased or decreased by a prescribed magnitude for causing the actual throttle position to gradually approach the target throttle position ST, whereby the actual throttle position will be able to reach the target throttle position.

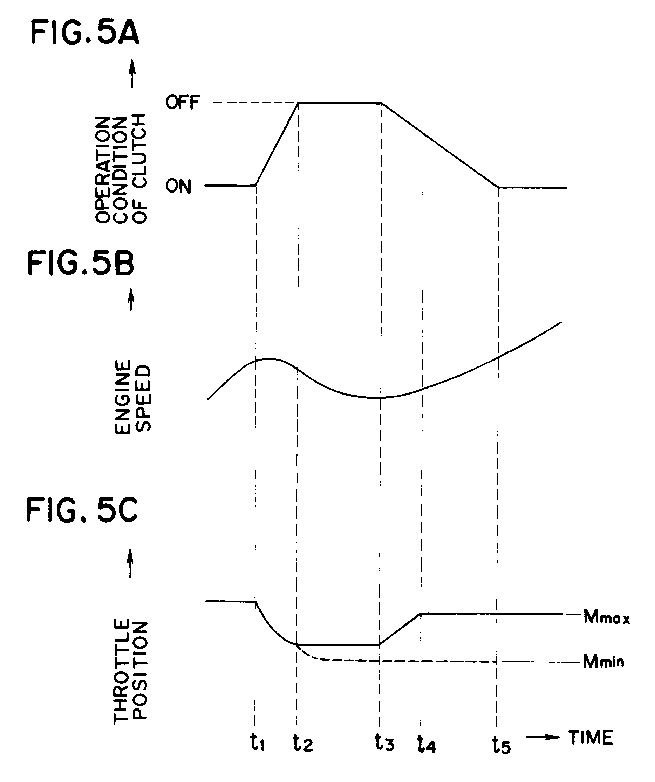

The speed control operation of the internal combustion engine 2 according to the first and second control programs 40 and 50 shown in Figs. 2 to 4 will be described with reference to Figs. 5A to 5C.

Since the clutch 4 is in its completely engaged state before $T_1$, and the automatic gear-shifting operation has not begun yet, the throttle position of the throttle valve 28 is controlled in the normal control mode before $t_1$. Accordingly, the determination in step 43 is NO when the first control program 40 is executed and it follows that the flag F is set to 0.

The level of the first signal Sa becomes high when the automatic gear-shifting operation is started at time $t_2$ under the condition described above, and the clutch 4 is disengaged to assume its completely disengaged state (OFF state) at time $t_1$ as shown in Fig. 5A. Accordingly, the determination in step 43 becomes YES after $t_1$ to make the flag F become 1 and constant speed control is carried out in step 55. As a result, the throttle position is controlled so as to be fixed at the target throttle position as shown in Fig. 5C for obtaining the desired engine speed, whereby the engine speed is lowered as shown in Fig. 5B.

When the operation for engaging the clutch 4 is started at $t_3$ after the transmission 5 has shifted to the target position, the determination in step 45 is YES so that the flag F is set to 2 in step 47. Consequently, each of the determinations in steps 52 and 54 of the second control program 50 becomes NO, so that discrimination is made in step 56 as to whether or not SA is equal to ST. The throttle position is controlled in step 57 in the transient control mode as was described in detail with reference to Fig. 4 in the case where SA is not equal to ST. That is, the actual throttle position SA is increased or decreased by a predetermined small magnitude for each program cycle, and finally the actual throttle position SA reaches Mmax or Mmin which is substantially equal to the target throttle position ST depending upon the amount of operation of the accelerator pedal 15 at $t_4$.

The determination in step 56 becomes YES when SA is equal to ST, and the flag F becomes 0 again to control the throttle position in the normal control mode. As illustrated in Fig. 5C, the throttle position is maintained at the set value Mmax, which is substantially equal to the target throttle position if the amount of operation of the acceleration pedal 15 has not been changed. In addition, the values of $\Delta A$ and $\Delta B$ may be determined in such a way that time $t_4$ when SA reaches ST will to come before time $t_5$ when the engagement of the clutch 4 is completed.

With this constitution, an accelerating force will be applied to the vehicle after $t_4$. In this case, after the beginning of the operation for engaging the clutch 4, the target value of the throttle position is gradually increased until Mmax which is determined in accordance with the amount of operation of the accelerator pedal 15, so that the engine speed is increased at a rate corresponding to the amount of operation of the accelerator pedal 15 after $t_4$ as illustrated in Fig. 5B. As a result, the driver will experience a definite and adequate feeling of acceleration at the time $t_5$, at which the automatic gear-shifting operation is completed.

This effect is based on the fact that the throttle position control according to the amount of operation of the accelerator pedal 15 starts as soon as the engaging operation of the clutch 4 is started, whereby the vehicle speed varies faithfully in accordance with the operations performed by the driver and it is possible to eliminate the incompatibility between the feeling expected by the driver and the operations he carries out. Therefore, even if the gear-shifting operation is carried out in, for example, a case where the driver has fully depressed the accelerator in order to pass another car, for the reasons described above, the vehicle can be accelerated sufficiently, enabling preferable vehicle operation control from the point of safe driving.

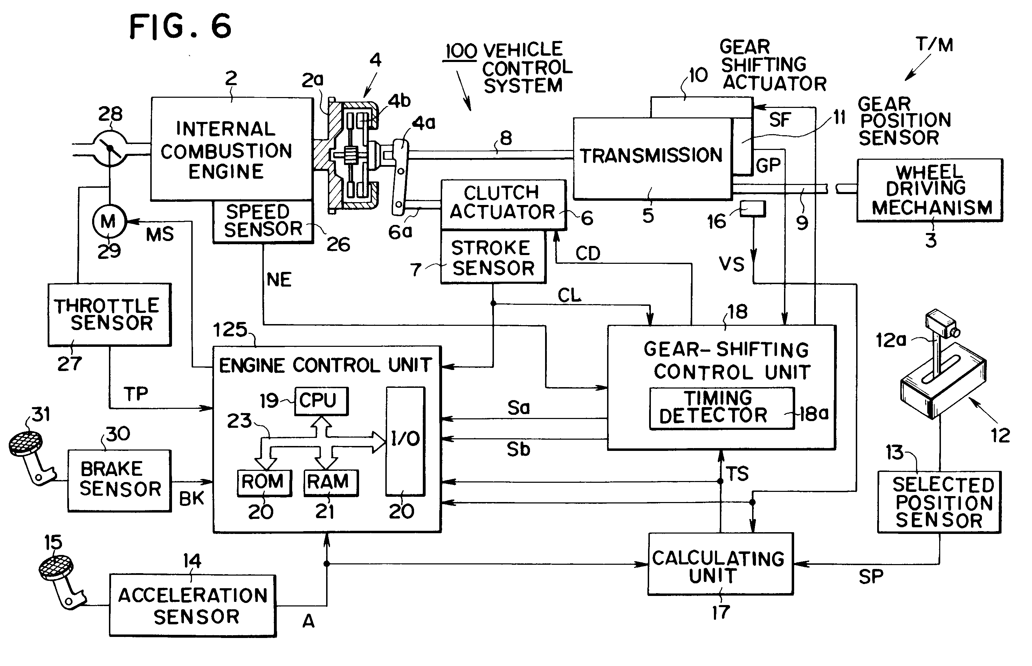

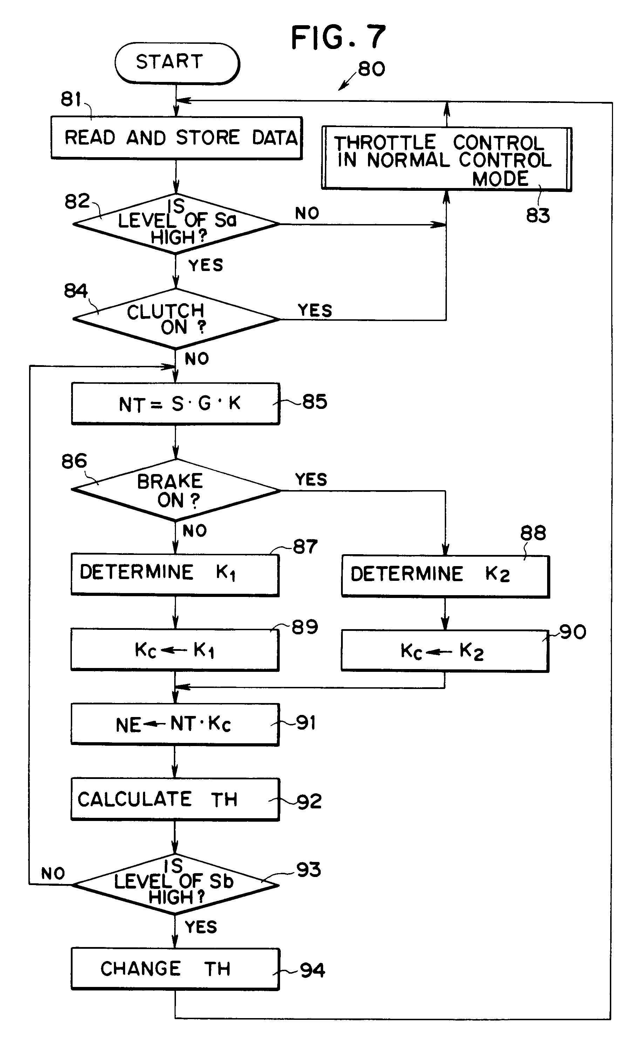

Fig. 6 is a schematic view of another embodiment of a control system for a vehicle with an electronically controlled type automatic transmission system coupled with an internal combustion engine whose rotational speed is controlled in accordance with the present invention. The arrangement of the vehicle control system 100 (shown in Fig. 6) is basically the same as the arrangement of the vehicle control system 1 shown in Fig 1 but is different from the vehicle control system 1 in that the clutch signal CL and a brake signal BK indicating whether or not a brake pedal 31 is depressed and supplied from a brake sensor 30 coupled with the brake pedal 31 are supplied to an engine control unit 125 corresponding to the engine control unit 25 shown in Fig. 1. Furthermore, the brake pedal 31 is connected with a conventional braking device (not shown) and the engine control unit 125 operates in accordance with a different control program stored in the ROM 20 of the engine control unit 125 in response to the input signals including the brake signal BK. The flowchart of this control program is indicated by reference numeral 80 in Fig. 7. In Fig. 6, portions the same as those of Fig. 1 are designated by identical reference numerals, respectively, and the descriptions thereof will be omitted.

The vehicle control system 100 of Fig. 6 is different from that of Fig. 1 in that the magnitude of the target throttle position ST is changed depending upon whether or not the braking device is in an operative condition.

Explanation will be given as to the engine control operation of the engine control unit 125 with reference to the flowchart of the control program 80 shown in Fig. 7.

The execution of the control program 80 is started at predetermined regular time intervals and after the start of the execution of the control program 80, step 81 is executed first for reading and storing data corresponding to all of the signals supplied to the engine control unit 125. After this, the operation moves to step 82 wherein discrimination is made as to whether or not an automatic gear-shifting operation is being carried out on the basis of the first signal Sa. The determination in step 82 is NO if no automatic gear-shifting operation is being carried out or the level of the first signal Sa is low, and the operation moves to step 83 wherein the throttle position of the throttle valve 28 is controlled in the normal control mode similarly to the control performed in step 53 of the second control program 50. The operation returns to step 81 after the execution of step 83.

The operation moves to step 84 if the determination in step 82 is YES, and discrimination is made in step 84 on the basis of the clutch signal CI as to whether or not the clutch 4 is ON. The determination in step 84 is YES in the case where the clutch 4 is fully engaged, and then the operation moves to step 83. In contrast, the determination in step 84 is NO in the case where the clutch 4 is not fully engaged and then the operation moves to step 85 wherein the target engine speed NT for the state of clutch disengagement is calculated in accordance with the following formulation.

$$NT = S \times G \times K \qquad (2)$$

where, S is the vehicle speed before the performance of the gear-shifting operation, G is the gear ratio which is to be obtained by the gear-shifting operation, and K is a constant.

In the next step 86 discrimination is made as to whether or not the braking device is rendered perative (ON), and the operation moves to step 87 if the braking device is not ON. In step 87 a coefficient $K_1$ is determined in accordance with the amount of operation of the accelerator pedal 15 by, for example, a map calculation. On the other hand, the operation moves to step 88 if the braking device is ON, and a coefficient $K_2$ ($< K_1$) is determined. The coefficient $K_1$ may be a fixed value.

The coefficient $K_1$ is set as the value of a variable Kc in step 89 when the braking device is OFF, and the coefficient $K_2$ is set as the value of the variable Kc in step 90 when the braking device is ON. Then, the final target engine speed TE is calculated in step 91 in accordance with the following formula

$$TE = NT \times Kc \qquad (3)$$

The operation further moves to step 92 wherein the target throttle position TH required for obtaining the target engine speed TE determined by the use of the formula (3) is calculated.

After this, the operation moves to step 93 wherein discrimination is made on the basis of the level of the second signal Sb as to whether or not the gear-shifting operation for shifting the transmission 5 to the target position has been completed. If the gear-shifting operation for shifting the transmission 5 to the target position has not been completed yet or the level of the second signal Sb is not high yet, the operation returns to step 85. The determination in step 93 becomes YES when the gear-shifting operation for shifting the transmission 5 to the target position has been completed, and the operation moves to step 94.

In step 94, the target throttle position TH determined in step 92 is gradually changed with the passage of time until the target throttle position TH has reached the upper limit value Mmax, which is determined in accordance with the amount of operation of the accelerator pedal 15 at that time if the driver depresses the accelerator pedal 15 during the gear-shifting operation for shifting the transmission 5 to the target position. Furthermore, the actual throttle position is controlled so as to be equal to the target throttle position TH or the upper limit value Mmax at each moment in the same manner as in step 57 shown in Fig. 4. Thus, after the gear-shifting operation for shifting the transmission 5 to the target position, the engine speed is controlled in accordance with the target throttle position determined in step 94.

As a result, if the accelerator pedal 15 is depressed during the gear-shifting operation, the engine speed is controlled after the completion of the gear-shifting operation for shifting the transmission 5 to the target position in a similar manner to the control system shown in Fig. 1, and the control result will be similar to that shown in Figs. 5A to 5C.

On the other hand, if the brake pedal is depressed to render the braking device operative, but the accelerator pedal 15 is not depressed, the actual throttle position varies as indicated by the broken line in Fig. 5C. That is, a lower throttle position is established due to the selection of the coefficient $K_2$ after the disengagement of the clutch 4 at $t_2$. The lower throttle position is maintained in step 94 because of no depression of the accelerator pedal 15. This will cause the driver to experience a feeling of deceleration during the engaging operation of the clutch 4 after the completion of the gear-shifting operation for shifting the transmission 5 to the target position, whereby the incompatibility between the deceleration feeling expected by the driver and the braking operation effected by the driver can be eliminated.

If the driver shifts his foot from the brake pedal to the accelerator pedal to accelerate the vehicle during the gear-shifting operation, the target throttle position TH is of course increased by an amount corresponding to the amount of depression of the accelerator pedal at that time, whereby the driver will experience an appropriate feeling of acceleration.

## Claims

1. A method for controlling the speed of a vehicle engine (2) with an automatic transmission system (T/M), which includes a clutch (4) and a gear transmission (5) electronically controlled so as to shift automatically the gear transmission to a target gear position determined in response to an operation parameter or parameters of the vehicle, said method comprising the steps of:

determining a target speed (NT, RT) of the engine during a condition of disengagement of the clutch (4);

detecting the operation condition of the clutch (4);

regulating a fuel regulating member (28) for controlling the fuel quantity supplied to the internal combustion engine (2) so as to obtain the target speed (NT, RT) while the clutch (4) is in its disengaged state; and

detecting the amount of operation of an accelerating member (15), characterised in that the method further comprises the step of

controlling the fuel regulating member (28), during at least a part of the period during which the clutch (4) is being brought substantially into engagement after the gear transmission (5) was shifted into the target gear position, so as to change gradually the condition of the fuel regulating member (28) in accordance with the amount of operation of the accelerating member (15) of the vehicle at that time.

2. A method as claimed in claim 1, characterised in that the target speed (NT, RT) of the engine is determined after the completion of the gear-shifting operation, in accordance with the vehicle speed and the resulting gear ratio (GR, G) to be obtained after the gear-shifting operation.

3. A method as claimed in claim 1 or 2, characterised in that said controlling step has steps of: determining a target fuel quantity corresponding to the amount of operation of the accelerating member; detecting an actual fuel quantity; comparing the target fuel quantity with the actual fuel quantity; and changing the actual fuel quantity to the target fuel quantity gradually until the actual fuel quantity becomes equal to the target fuel quantity.

4. A method as claimed in claim 3, characterised in that a set value which is greater than the actual fuel quantity at that time by a predetermined value is set as a target amount at regular time intervals when the target fuel quantity is greater than the actual fuel quantity, and the fuel regulating member (28) is controlled so as to obtain the target amount by following the target amount until the actual fuel quantity has reached the target fuel quantity.

5. A method as claimed in claim 4, characterised in that a set value which is less than the actual fuel quantity at that time by a predetermined value is set as a target amount at regular time intervals when the target fuel quantity is less than the actual fuel quantity, and the fuel regulating member (28) is controlled so as to obtain the target amount by following the target amount until the actual fuel quantity has reached the target fuel quantity.

6. A method as claimed in claim 1, characterised in that the actual fuel amount is controlled so as to reach the target fuel quantity corresponding to the amount of operation of the accelerating member (15) by the time the clutch (4) has just been completely engaged.

7. A method as claimed in claim 1, characterised in that the speed of the vehicle engine is controlled so as to equal the speed corresponding to the amount of operation of the accelerating member (15) by the time the clutch (4) has just been completely engaged.

8. A method as claimed in any preceding claim, characterised in that the fuel regulating member (28) is a throttle valve member.

9. A method as claimed in claim 1, characterised in that the method further comprises the steps of:

detecting whether or not a braking device (31) is operated; and

correcting the target engine speed to a lower speed in accordance with the operation condition of the braking device (31).

10. A method as claimed in claim 9, characterised in that a coefficient (Kc) is determined in accordance with the condition of operation of the braking device and the target speed (NT) is multiplied by the coefficient (Kc) to obtain the corrected target speed (TE).

11. A method as claimed in claim 10, characterised in that the coefficient (Kc) is determined in the case where the braking device (31) is being operated in such a way that a feeling of deceleration corresponding to the operation of the braking device (31) can be obtained during the engaging operation of the clutch (4).

12. A method as claimed in any one of claims 9 to 11, characterised in that when, after the time that engagement of the clutch (4) is commenced, the braking device (31) is operated and the accelerating member (15) is not operated, the fuel regulating member (28) is regulated to maintain the corrected target engine speed (TE).

**Patentansprüche**

1. Verfahren zur Regelung der Drehzahl eines Fahrzeugmotors (2) mit einem automatischen Kraftübertragungssystem (T/M), das eine Kupplung (4) und ein Zahnradgetriebe (5) aufweist, das elektronisch gesteuert ist, um das Zahnradgetriebe auf eine in Abhängigkeit von einem Parameter oder von Parametern des Fahrzeugbetriebs bestimmte Zielgangstellung automatisch zu schalten, wobei das Verfahren die Schritte umfaßt:
Bestimmen einer Zieldrehzahl (NT, RT) des Motors während eines Auskupplungszustands der Kupplung (4);
Feststellen des Betriebszustandes der Kupplung (4);
Regeln eines Kraftstoffregelteils (28) zur Steuerung der dem Verbrennungsmotor (2) zugeführten Kraftstoffmenge, um die Zieldrehzahl (NT, RT) zu erreichen, während sich die Kupplung (4) in ihrem ausgekuppelten Zustand befindet;
Feststellen des Betätigungsgrades eines Beschleunigungsteils (15), **dadurch gekennzeichnet**, daß das Verfahren weiter umfaßt den Schritt
Steuern des Kraftstoffregelteils (28) während mindestens eines Teils der Zeitspanne, während der die Kupplung (4) im wesentlichen eingekuppelt wird, nachdem das Zahnradgetriebe (5) in die Zielgangstellung geschaltet worden ist, um den Zustand des Kraftstoffregelteils (28) dem Betätigungsgrad des Beschleunigungsteils (15) des Fahrzeugs zu dieser Zeit allmählich zu verändern.

2. Verfahren nach Anspruch 1, **dadurch gekennzeichnet**, daß die Zieldrehzahl (NT, RT) des Motors nach dem Abschluß des Schaltvorgangs entsprechend der Motordrehzahl und dem sich ergebenden Übersetzungsverhältnis (GR, G) bestimmt wird, das nach dem Schaltungsvorgang zu erreichen ist.

3. Verfahren nach Anspruch 1 oder 2, **dadurch gekennzeichnet**, daß der Steuerschritt die Schritte umfaßt:
Bestimmen einer Zielkraftstoffmenge, die dem Betätigungsgrad des Beschleunigungsteils entspricht, Feststellen einer aktuellen Kraftstoffmenge; Vergleichen der Zielkraftstoffmenge mit der aktuellen Kraftstoffmenge und allmähliches Verändern der aktuellen Kraftstoffmenge zu der Zielkraftstoffmenge, bis die aktuelle Kraftstoffmenge gleich der Zielkraftstoffmenge wird.

4. Verfahren nach Anspruch 3, **dadurch gekennzeichnet**, daß ein Einstellwert, der zu dieser Zeit um einen vorbestimmten Wert größer als die aktuelle Kraftstoffmenge ist, als eine Zielgröße zu regelmäßigen Zeitintervallen eingestellt wird, wenn die Zielkraftstoffmenge größer als die aktuelle Kraftstoffmenge ist, und daß das Kraftstoffregelteil (28) in Hinblick darauf gesteuert wird, die Zielgröße zu erreichen, indem die Zielgröße verfolgt wird, bis die aktuelle Kraftstoffmenge die Zielkraftstoffmenge erreicht hat.

5. Verfahren nach Anspruch 4, **dadurch gekennzeichnet**, daß ein Einstellwert, der zu dieser Zeit um einen vorbestimmten Wert kleiner als die aktuelle Kraftstoffmenge ist, als eine Zielgröße zu regelmäßigen Zeitintervallen eingestellt wird, wenn die Zielkraftstoffmenge kleiner als die aktuelle Kraftstoffmenge ist, und daß das Kraftstoffregelteil (28) in Hinblick darauf gesteuert wird, die Zielgröße zu erreichen, indem die Zielgröße verfolgt wird, bis die aktuelle Kraftstoffmenge die Zielkraftstoffmenge erreicht hat.

6. Verfahren nach Anspruch 1, **dadurch gekennzeichnet**, daß die aktuelle Kraftstoffmenge in Hinblick darauf gesteuert wird, die Zielkraftstoffmenge zu erreichen, die dem Betätigungsgrad des Beschleunigungsteils (15) zu der Zeit entspricht, zu der die Kupplung (4) gerade vollständig eingekuppelt worden ist.

7. Verfahren nach Anspruch 1, **dadurch gekennzeichnet**, daß die Drehzahl des Fahrzeugmotors in Hinblick darauf gesteuert wird, daß sie gleich der Drehzahl ist, die dem Betätigungsgrad des Beschleunigungsteils (15) zu der Zeit entspricht, zu der die Kupplung (4) gerade vollständig eingekuppelt worden ist.

8. Verfahren nach irgendeinem vorhergehenden Anspruch, **dadurch gekennzeichnet,** daß das Kraftstoffregelteil (28) ein Drosselventilteil ist.

9. Verfahren nach Anspruch 1, **dadurch gekennzeichnet**, daß das Verfahren weiter umfaßt die Schritte
Feststellen, ob eine Bremseinrichtung (31) in Betrieb steht oder nicht, und
Korrigieren der Zielmotordrehzahl auf eine geringere Drehzahl entsprechendem Betätigungszustand der Bremseinrichtung (31).

**10.** Verfahren nach Anspruch 9, **dadurch gekennzeichnet**, daß ein Koeffizient (Kc) entsprechend dem Betätigungszustand der Bremseinrichtung bestimmt wird und daß die Zieldrehzahl (NT) mit dem Koeffizienten (Kc) multipliziert wird, um die korrigierte Zieldrehzahl (TE) zu erreichen.

**11.** Verfahren nach Anspruch 10, **dadurch gekennzeichnet**, daß der Koeffizient (Kc) in dem Fall, daß die Bremseinrichtung (31) in Betrieb steht, in einer solchen Weise bestimmt wird, daß ein dem Betätigungsgrad der Bremseinrichtung (31) entsprechendes Verzögerungsgefühl während des Einkupplungsvorgangs der Kupplung (4) erreicht werden kann.

**12.** Verfahren nach irgendeinem der Ansprüche 9 bis 11, **dadurch gekennzeichnet**, daß dann, wenn nach der Zeit, zu der das Einkuppeln der Kupplung (4) begonnen hat, die Bremseinrichtung (31) betätigt wird und das Beschleunigungsteil (15) nicht betätigt wird, das Kraftstoffregelteil (28) geregelt wird, um die korrigierte Zielmotordrehzahl (TE) aufrechtzuerhalten.

## Revendications

**1.** Procédé pour commander la vitesse d'un moteur (2) de véhicule avec un système de transmission automatique (T/M) qui comporte un embrayage (4) et une boîte de vitesses (5) commandés électroniquement de façon que la boîte de vitesse passe automatiquement à un rapport cible déterminé en réponse à un paramètre ou à des paramètres fonctionnel(s) du véhicule, ledit procédé comprenant les étapes consistant à:

déterminer une vitesse cible (NT, RT) du moteur pendant un état débrayé de l'embrayage (4);

détecter l'état de fonctionnement de l'embrayage (4);

réguler un élément (28) régulateur de carburant pour commander la quantité de carburant fournie au moteur (2) à combustion interne de façon à obtenir la vitesse cible (NT, RT) pendant que l'embrayage (4) est à l'état débrayé; et

détecter le degré d'actionnement d'un élément (4) d'accélération, caractérisé en ce que le procédé comprend en outre l'étape consistant à:

commander l'élément (28) régulateur de carburant pendant au moins une partie de la période pendant laquelle l'embrayage (4) est pratiquement embrayé après que la boite de vitesse (5) soit passée au rapport cible, de façon à modifier progressivement l'état de l'élément (28) régulateur de carburant en fonction du degré d'actionnement de l'élément (15) d'accélération du véhicule à cet instant.

**2.** Procédé selon la revendication 1, caractérisé en ce que la vitesse cible (NT, RT) du moteur est déterminée après achèvement de l'opération de changement de rapport, en fonction de la vitesse du véhicule et du rapport de vitesse résultant (GR, G) devant être obtenu après l'opération de changement de vitesse.

**3.** Procédé selon la revendication 1 ou 2, caractérisé en ce que ladite étape de commande comporte les étapes consistant à: déterminer une quantité cible de carburant correspondant au degré d'actionnement de l'élément d'actionnement; détecter une quantité effective de carburant; comparer la quantité cible de carburant à la quantité effective de carburant; et transformer progressivement la quantité effective de carburant en la quantité cible de carburant jusqu'à ce que la quantité effective de carburant devienne égale à la quantité cible de carburant.

**4.** Procédé selon la revendication 3, caractérisé en ce qu'une valeur fixée qui est supérieure d'une valeur prédéterminée à la quantité effective de carburant à cet instant, est fixée à une valeur cible à des intervalles de temps réguliers lorsque la quantité cible de carburant est supérieure à la quantité effective de carburant, et en ce que l'élément (28) régulateur de carburant est commandé de façon à obtenir la valeur cible par poursuite de la valeur cible jusqu'à ce que la quantité effective de carburant ait atteint la quantité cible de carburant.

**5.** Procédé selon la revendication 4, caractérisé en ce qu'une valeur fixée qui est inférieure d'une valeur prédéterminée à la quantité effective de carburant à cet instant, est fixée en tant que valeur cible à des intervalles de temps réguliers lorsque la quantité cible de carburant est inférieure à la quantité effective de carburant, et en ce que l'élément (28) régulateur de carburant est commandé de façon à obtenir la valeur cible par poursuite de la valeur cible jusqu'à ce que la quantité effective de carburant ait atteint la quantité cible de carburant.

**6.** Procédé selon la revendication 1, caractérisé en ce que la quantité effective de carburant est commandée de façon à atteindre la quantité cible de carburant correspondant au degré d'actionnement de l'élément (15) d'accélération à l'instant où l'embrayage (4) vient d'être entièrement embrayé.

7. Procédé selon la revendication 1, caractérisé en ce que la vitesse du moteur du véhicule est commandée de façon à être égale à la vitesse correspondant au degré d'actionnement de l'élément (15) d'accélération à l'instant où l'embrayage (4) vient d'être entièrement embrayé.

8. Procédé selon l'une quelconque des revendications précédentes, caractérisé en ce que l'élément (28) régulateur de carburant est un élément à papillon d'étranglement.

9. Procédé selon la revendication 1, caractérisé en ce que le procédé comprend en outre les étapes consistant à:
   détecter si un dispositif de freinage (31) est ou non actionné; et
   corriger la vitesse cible du moteur pour la réduire à une vitesse inférieure selon l'état de fonctionnement du dispositif de freinage (31).

10. Procédé selon la revendication 9, caractérisé en ce qu'un coefficient (Kc) est déterminé en fonction de l'état de fonctionnement du dispositif de freinage et en ce que la vitesse cible (NT) est multipliée par le coefficient (Kc) pour obtenir la vitesse cible corrigée (TE).

11. Procédé selon la revendication 10, caractérisé en ce que le coefficient (Kc) est déterminé dans le cas où le dispositif de freinage (31) est actionné de telle manière qu'une sensation de décélération correspondant à l'actionnement du dispositif (31) de freinage puisse être obtenue pendant l'opération d'embrayage de l'embrayage (4).

12. Procédé selon l'une quelconque des revendications 9 à 11, caractérisé en ce que, après l'instant où l'embrayage de l'embrayage (4) a commencé, lorsque le dispositif (31) est actionné et l'élément d'accélération (15) n'est pas actionné, l'élément (28) régulateur de carburant est régulé de façon à conserver la vitesse de moteur cible corrigée (TE).

FIG.1

VEHICLE CONTROL SYSTEM

EP 0 390 423 B1

# FIG.2

START

41
READ DATA

40

42
F = 2 ?
NO

43
IS LEVEL OF Sa HIGH ?
YES

45
IS LEVEL OF Sb HIGH ?
YES

YES

NO

44
F ← 0

NO

46
F ← 1

47
F ← 2

END

# FIG. 3

START

READ DATA — 51

52

F = 0 ? — NO

YES

53

THROTTLE CONTROL IN NORMAL CONTROL MODE

54

F = 1 ? — NO

YES

56

SA = ST ? — YES

NO

55

THROTTLE CONTROL IN CONSTANT CONTROL MODE

57

THROTTLE CONTROL IN TRANSIENT CONTROL MODE

58

F ← 0

END

50

# FIG. 4

FROM STEP 56

57

DETERMINE ST — 71

72

SA < ST ? — YES / NO

76 DETERMINE ΔB

73 DETERMINE ΔA

77 M ← SA − ΔB

74 M ← SA + ΔA

75 THROTTLE POSITION CONTROL

TO END

EP 0 390 423 B1

# FIG.5A

OPERATION
CONDITION
OF CLUTCH

OFF

ON

# FIG.5B

ENGINE
SPEED

# FIG. 5C

THROTTLE
POSITION

Mmax

Mmin

$t_1$  $t_2$      $t_3$ $t_4$     $t_5$ ⟶ TIME

17

FIG. 6

# FIG. 7

START
↙80

81 — READ AND STORE DATA

THROTTLE CONTROL IN NORMAL CONTROL MODE — 83

82 — IS LEVEL OF Sa HIGH? — NO

YES

84 — CLUTCH ON? — YES

NO

NT = S·G·K — 85

86 — BRAKE ON? — YES

NO

DETERMINE K₁ — 87

DETERMINE K₂ — 88

$K_c \leftarrow K_1$ — 89

$K_c \leftarrow K_2$ — 90

$NE \leftarrow NT \cdot K_c$ — 91

CALCULATE TH — 92

93 — IS LEVEL OF Sb HIGH? — NO

YES

CHANGE TH — 94